# EUROPEAN PATENT APPLICATION

(11) **EP 4 814 699 A1**
(43) Date of publication of application: **30.09.2026**
(21) Application number: 26167738.9
(22) Date of filing: 25.03.2026
(51) Int. Cl.: G06F 8/65

(54) **DYNAMIC VEHICLE UPDATE CONTROL SYSTEM**

(30) Priority: 28.03.2025 IN 202541029763
(71) Applicant: TVS Motor Company Limited, 600006 Chennai (IN)
(72) Inventor: Gudi, Venkata Ramana, 600006 Chennai (IN)
(74) Representative: Patentanwaltskanzlei Matschnig & Forsthuber OG

(57) **Abstract**

The present invention provides a method for controlling updates of a vehicle (100), the method comprising, collecting (501) one or more vehicle attributes (201) by a control unit (101) installed in the vehicle (100), sending (502) the one or more vehicle attributes (201) to a server (301) by the control unit (101), generating (503) a plurality of reference parameters (302) by the server (301) based on the one or more vehicle attributes (201), receiving (504) the plurality of reference parameters (302) from the server (301) by the control unit (101), analyzing (505) a plurality of real-time data (402) with the plurality of reference parameters (302) by a monitoring, analyzing, and validation unit (303) of the control unit (101), determining (506) whether a software update (601) is required based on the analysis of the plurality of real-time data (402) with the plurality of reference parameters (302), and performing (507) the software update (601) based on the determination.

## Description

### TECHNICAL FIELD

The present invention generally relates to a vehicle. More particularly, the present invention relates to dynamic vehicle update control system.

### BACKGROUND

In modern electric vehicles (EVs), updates are required frequently to improve the performance of the vehicle, and the central control unit (VCU) plays a critical role in managing essential operations such as battery charging, motor control, and overall vehicle performance.

While this centralized approach is effective for basic functionality, it comes with a set of challenges, particularly in terms of adaptability and scalability. The system relies on predefined attributes and fixed instructions, making it difficult to maintain or upgrade in a way that can account for evolving vehicle needs or environmental changes over time.

In traditional vehicle update methods, updates are typically carried out remotely by a server. This system often relies on predefined criteria and lacks the ability to determine if a specific vehicle truly requires the update. Consequently, all vehicles are treated the same way, and unnecessary updates are applied even when they are not needed, leading to inefficiencies in time, bandwidth, and vehicle performance.

The server-driven update model suffers from a one-size-fits-all approach, where updates are applied uniformly across all vehicles. This approach does not take into account the unique conditions or history of individual vehicles, such as their age, usage patterns, or specific component conditions. As a result, updates are often irrelevant to the specific needs of a vehicle, which may lead to unnecessary resource consumption and suboptimal performance.

In traditional systems, vehicles rely on constant communication with a remote server to receive updates. This introduces a dependency on external factors such as network stability and server availability. Any disruption in communication, whether due to poor connectivity or server downtime, can prevent the vehicle from receiving timely updates, causing delays and inefficiencies in the vehicle's operation and maintenance.

In many existing vehicle systems, software updates are triggered without proper analysis of whether the update is necessary. This results in updates being applied to all vehicles in a blanket manner, even if the updates only affect specific components or systems of certain vehicles. This process leads to unnecessary downtime for vehicle owners and unnecessary resource usage by manufacturers, who are sending updates that may not be relevant to every vehicle.

A further issue in the current method is the lack of a dynamic and real-time assessment of whether the update is truly needed. In some systems, updates are pushed automatically based on static schedules or predetermined requirements without analyzing the actual condition of the vehicle. This can cause situations where a vehicle that does not need an update is unnecessarily updated, leading to a waste of system resources, time, and energy.

Server-based updates are often inefficient as they rely on a static set of parameters that apply to all vehicles. These updates may not account for variations in vehicle usage, environmental conditions, or the degradation of components over time. As a result, vehicles may receive updates that are not tailored to their specific needs, leading to suboptimal performance, excessive energy consumption, and an increased likelihood of technical issues in the long run.

Many traditional systems fail to incorporate vehicle-specific data such as the vehicle's history, age, and operating environment when determining the necessity of an update. Without considering these critical factors, updates are applied indiscriminately, and the vehicle may receive updates that are irrelevant to its current condition, leading to inefficiencies in the update process.

The current update methodology struggles to address the unique needs of individual vehicles. This one-size-fits-all approach fails to adapt based on the individual history, usage, or wear-and-tear of a vehicle. As a result, even when updates are not needed for some vehicles, they are still pushed through the system, wasting valuable time and resources.

Additionally, traditional vehicle systems often lack the ability to detect when a vehicle is operating in less-than-optimal conditions. Factors such as extreme weather, road conditions, or vehicle usage patterns that differ from the "ideal" or "expected" scenario are often not factored into the update process. As a result, vehicles in harsh conditions may receive the same updates as vehicles in optimal conditions, leading to inefficiencies.

A significant drawback of current vehicle update processes is their reliance on a universal update method that does not account for variations in vehicle age, mileage, or usage patterns. Older vehicles or those with more wear may require different updates than newer vehicles, yet traditional systems apply the same updates across the board, potentially making the update less effective or even counterproductive.

Traditional vehicle systems fail to provide real-time analysis of a vehicle's condition before applying updates. This lack of real-time decision-making leads to situations where updates are provided without understanding the current operational state of the vehicle, resulting in unnecessary updates and wasting valuable resources.

Another problem with existing systems is the inefficiency in updating subsystems that may not need updates. In many modem vehicles, various subsystems like the battery management system, motor control system, and energy regeneration system may require different updates based on their current status. Traditional update methods do not address this granularity, leading to the application of unnecessary updates to subsystems that are functioning properly, resulting in wasted bandwidth, energy, and processing power.

The current systems fail to dynamically adjust based on real-time data and the actual status of the vehicle. Instead, updates are pushed based on static parameters, ignoring the real-time condition of the vehicle, leading to inefficiencies in performance and energy consumption. This lack of adaptability significantly limits the effectiveness of the update process.

As the vehicle's control systems become more interconnected, the need for more granular, vehicle-specific, and dynamic updates becomes critical. The inability to tailor updates to the actual condition of each vehicle, based on real-time data such as age, wear, environmental factors, and operational history, prevents the system from reaching its full potential in improving vehicle performance and efficiency.

Thus, there is a need to address the aforementioned problems.

### SUMMARY OF THE INVENTION

The present invention discloses a method for controlling updates of a vehicle the method includes collecting one or more vehicle attributes by a control unit installed in the vehicle, sending the one or more vehicle attributes to a server by the control unit, generating a plurality of reference parameters by the server based on the one or more vehicle attributes, receiving the plurality of reference parameters from the server by the control unit analyzing a plurality of real-time data with the plurality of reference parameters by a monitoring, analyzing, and validation unit of the control unit, determining whether a software update is required based on the analysis of the plurality of real-time data with the plurality of reference parameters and performing the software update based on the determination.

In one embodiment the method includes collecting one or more vehicle attributes by the control unit involves gathering data related to the operational parameters and history of the vehicle.

In another embodiment the method includes sending the one or more vehicle attributes to the server by the control unit involves transmitting the collected data for further processing.

In another embodiment the method includes generating the plurality of reference parameters by the server based on the one or more vehicle attributes involves creating reference parameters for comparison.

In another embodiment the method includes receiving the plurality of reference parameters from the server by the control unit involves obtaining the reference parameters for analysis.

In another embodiment the method includes analyzing a plurality of real-time data with the plurality of reference parameters by a monitoring, analyzing, and validation unit of the control unit involves comparing the real-time data with the reference parameters.

In another embodiment the method includes determining whether the software update is required based on the analysis of the plurality of real-time data with the plurality of reference parameters involves deciding if the software update is crucial to improve operations

In another the method includes embodiment performing the software update based on the determination involves implementing the software update crucial to the vehicle

In another embodiment the present invention discloses a vehicle update control system the system includes a control unit installed in the vehicle, a data collection module of the control unit configured to collect one or more vehicle attributes, a communication module of the control unit configured to send the one or more vehicle attributes to a server the server configured to generate a plurality of reference parameters based on the one or more vehicle attributes, a receiving module of the control unit configured to receive the plurality of reference parameters from the server, a monitoring, analyzing, and validation unit of the control unit configured to analyze a plurality of real-time data with the plurality of reference parameters, a determination module of the control unit configured to determine whether a software update is required based on the analysis of the plurality of real-time data with the plurality of reference parameters an update module of the control unit configured to provide the software update based on the determination.

In another embodiment the data collection module of the control unit is configured to collect one or more vehicle attributes by gathering data related to the vehicle operational parameters.

In another embodiment the communication module of the control unit is configured to send the one or more vehicle attributes to the server

In another embodiment the server is configured to generate the plurality of reference parameters based on the one or more vehicle attributes by creating reference parameters for comparison.

In another embodiment the receiving module of the control unit is configured to receive the plurality of reference parameters from the server by obtaining the plurality of reference parameters for analysis.

In another embodiment the monitoring, analyzing, and validation unit of the control unit is configured to analyze the plurality of real-time data with the plurality of reference parameters by comparing real-time data with the plurality of reference parameters.

In another embodiment the determination module of the control unit is configured to determine whether a software update is required based on the analysis of the plurality of real-time data with the plurality of reference parameters by deciding if the software update is crucial to improve performance.

### BRIEF DESCRIPTION OF THE DRAWINGS

The present invention will become more fully understood from the detailed description given herein below and the accompanying drawings which are given by way of illustration only and thus are not limitative of the present invention. Non-limiting and non-exhaustive embodiments of the present embodiments are described with reference to the following figures, wherein like reference numerals refer to like parts throughout the various views unless otherwise specified.
Figure 1 the flowchart outlines the method for managing vehicle software updates, starting with data collection, followed by evaluation to determine if an update is needed.
Figure 2 illustrates the block diagram where the control unit gathers real-time data from vehicle sensors, and the various module processes the data to determine and apply necessary updates to the vehicle.

### DETAILED DESRIPTION

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the system may extend beyond the described embodiments. For example, the teachings presented, and the needs of a particular application may yield multiple alternative and suitable approaches to implement the functionality of any detail described herein. Therefore, any approach may extend beyond the implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present disclosure now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

The present subject matter describes a method and system for managing real-time software updates in electric vehicles (EVs), focusing on optimizing power management and updating vehicle subsystems based on real-time data. The method addresses the need to efficiently update only the necessary subsystems of the vehicle, improving overall vehicle performance while conserving bandwidth, energy, and computational resources. The invention presents a solution that improves the update mechanism for electric vehicles by selectively targeting only the subsystems requiring updates, thereby reducing unnecessary data transmission and ensuring efficient vehicle operation.

The present subject matter describes a method and system for controlling updates of a vehicle's software, focusing on optimizing the update process by determining the necessity of updates based on the real-time conditions and operational data of the vehicle. The method ensures that updates are only performed when required, reducing unnecessary updates, optimizing the vehicle's performance, conserving bandwidth, and saving computational resources. The invention presents a solution that selectively applies updates only when necessary, thus minimizing downtime and enhancing overall vehicle efficiency.

The present subject matter addresses the limitations of conventional vehicle update systems, which often rely on external servers to push software updates to the vehicle. These traditional methods usually apply broad, one-size-fits-all updates regardless of whether the update is actually necessary for the vehicle at the moment. This approach leads to inefficiencies in time, resources, and power usage. The present invention solves these problems by enabling the vehicle to analyze its own operational data and determine whether an update is required, ensuring that only relevant updates are applied, which conserves both vehicle and network resources.

One objective of the present invention is to improve the efficiency of vehicle software updates by allowing the vehicle to self-assess its operational status and determine whether an update is required based on real-time data. Traditionally, updates are applied indiscriminately through server-based systems, often causing unnecessary updates to be installed. By having the vehicle perform an internal analysis of its operational data, the invention ensures that updates are only applied when needed, improving efficiency and reducing unnecessary transmissions of data to and from external servers.

To this end, the vehicle's control unit can gather real-time data and analyze the vehicle's current status, determining if an update is necessary without the need to rely on a continuous communication link to an external server. This reduces the dependency on external factors such as network availability, which can be a significant issue when the vehicle is located in remote areas or areas with poor network coverage, ensuring that the update process can still occur even in those conditions.

Another objective is to solve the inefficiencies associated with the need for constant communication between the vehicle and an external server for software updates. In traditional systems, vehicles are required to maintain a network connection to a server, which increases latency and leads to inefficiencies in the update process, particularly in areas with poor or no network connectivity. By enabling the vehicle to perform internal analysis and decide whether an update is required, the invention eliminates the need for ongoing communication with the server, ensuring that updates can occur independently of network connectivity.

To this end, the self-contained analysis capability within the vehicle enhances its autonomy, allowing it to process operational data locally and perform necessary updates based on the current condition of the vehicle. This ensures that updates can be completed without waiting for external input, reducing downtime and improving overall vehicle efficiency, especially in areas where connectivity may be limited or intermittent.

A further objective of the present invention is to improve the adaptability and precision of the update process by ensuring that only the subsystems requiring updates receive them. Traditional methods often send large, system-wide updates that include unnecessary updates for subsystems that are functioning properly. This not only wastes resources but also increases the time required to perform updates. The invention's method ensures that only relevant subsystems are targeted for updates, reducing the total time and resources required for the update process.

To this end, by analyzing the operational data of the vehicle in real time and determining which subsystems need updates, the invention streamlines the update process. It ensures that only the subsystems that are experiencing issues or require improvement are updated, thus optimizing the vehicle's performance and avoiding unnecessary use of system resources.

A key challenge with existing vehicle update systems is the reliance on external servers, which can lead to delays and inefficiencies in the update process, especially in situations where the vehicle is unable to maintain a continuous connection to the server. Existing systems often cause delays due to the back-and-forth communication between the vehicle and the server, resulting in unnecessary waiting times and increased vehicle downtime. The present invention solves this problem by enabling the vehicle to analyze its own operational data and determine the necessity of an update, reducing reliance on external servers and speeding up the decision-making process.

To this end, by performing the analysis internally, the vehicle can make faster decisions about whether an update is needed, without waiting for external servers to process the data and send back instructions. This not only reduces the time spent waiting for updates but also minimizes the energy consumed during the update process, ensuring a more efficient use of the vehicle's power resources.

Additionally, traditional vehicle systems often require human intervention to trigger or verify updates. This can lead to increased downtime for the vehicle and inconvenience for the owner, who may need to visit a service center or deal with delays in receiving updates. The present invention provides an automated solution that evaluates the need for updates and applies them independently, reducing the need for human intervention and ensuring timely updates are applied based on the vehicle's real-time operational status.

To this end, the automated decision-making capability of the invention ensures that the update process is streamlined, with updates being applied promptly and without unnecessary delays. The vehicle's ability to independently determine the need for an update improves user experience by reducing downtime and eliminating the need for the owner to take action.

The present invention also offers a significant improvement in the monitoring of key vehicle subsystems such as the battery, motor control systems, and energy regeneration units. By continuously monitoring these subsystems and analyzing their operational data, the system can predict potential issues before they become critical. This allows for timely updates that address potential failures proactively, improving the overall reliability and lifespan of the vehicle.

To this end, this proactive update mechanism ensures that updates are only applied when necessary, based on the real-time health of the vehicle's critical subsystems. This reduces the likelihood of system failures and optimizes the performance of key vehicle components, significantly extending the vehicle's lifespan and enhancing its overall reliability.

Finally, it is an objective of the present invention to optimize energy consumption during the update process. Traditional update systems often involve large-scale updates that can waste significant amounts of power, especially when updates are applied unnecessarily. The invention's selective update mechanism ensures that only the necessary subsystems receive updates, thus minimizing the impact on overall vehicle energy consumption. This system ensures that updates do not result in excessive power draw, which would otherwise negatively affect the vehicle's performance and energy efficiency.

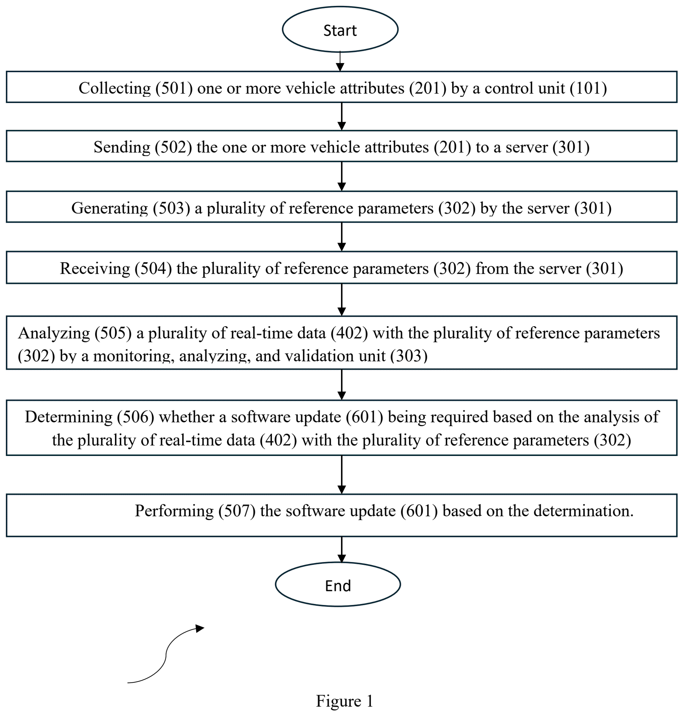

Figure 1 illustrates the method flowchart outlining the steps for controlling updates of a vehicle (100). The method for controlling updates of a vehicle (100) starts with the control unit (101), which collects one or more vehicle attributes (201) from the vehicle's various sensors. These attributes include data such as battery status, engine performance, vehicle usage, and driving conditions, providing a snapshot of the vehicle's operational state. After collecting the data, the control unit (101) sends this information to a server (301) for further processing. The server (301) uses the data to generate a set of reference parameters (302), which are parameters that serve as benchmarks based on the vehicle's current attributes. The control unit (101) then receives these reference parameters (302) from the server (301). With these parameters in hand, the monitoring, analyzing, and validation unit (303) of the control unit (101) analyzes the real-time data (402) in relation to the reference parameters (302). This analysis is crucial as it helps determine whether the vehicle's performance deviates from optimal operating conditions. If the analysis indicates that the vehicle's current state requires an update, the system then determines whether a software update (601) is needed. This determination is based on whether the vehicle's current condition or performance requires an improvement to function better. If the analysis confirms that an update is necessary, the system performs the update (601), ensuring that only the required changes are applied to the vehicle's software, thus optimizing its performance and reducing unnecessary updates. This method helps in managing vehicle updates efficiently, ensuring that only relevant updates are performed based on real-time data analysis.

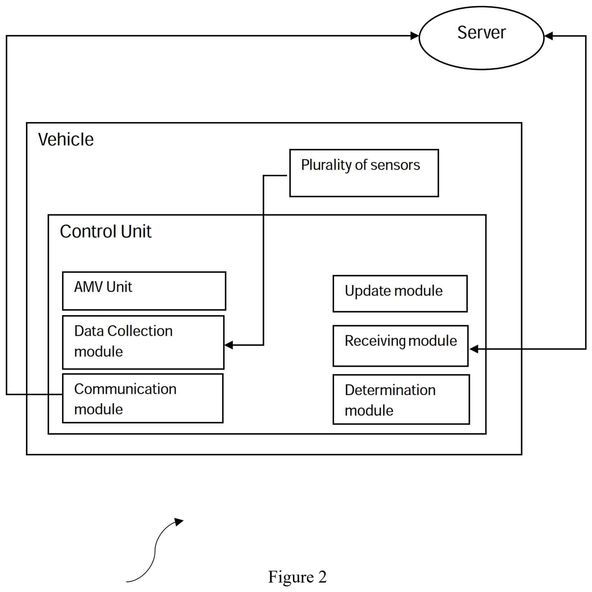

Figure 2 illustrates a block diagram that depicts the architecture of the vehicle update control system, showing the interactions between various components in the system. At the heart of this system is the vehicle (100), which contains a control unit (101) installed in the vehicle. The control unit (101) is responsible for managing the entire update process. Attached to the control unit is a data collection module (701), which is responsible for gathering vehicle attributes (201) from a set of sensors (120) installed in the vehicle. These sensors collect real-time data, such as battery status, motor performance, temperature, and other operational factors that reflect the vehicle's current conditions. This real-time data is then processed by the control unit (101) and is sent to a server (301) through the communication module (702). The communication module facilitates the transmission of the collected data from the vehicle to the server, ensuring that all necessary vehicle attributes are communicated for further analysis. Once the data reaches the server (301), it is processed, and the server generates a plurality of reference parameters (302) based on the data received. These reference parameters act as benchmarks and are designed to reflect the optimal operational standards for the vehicle, taking into account the specific vehicle attributes provided by the data collection module (701). After the server has generated the reference parameters (302), they are sent back to the control unit (101) via the receiving module (703). This module receives the reference parameters from the server and prepares them for further analysis within the control unit. The monitoring, analyzing, and validation unit (303) within the control unit then takes over, analyzing the real-time data (402) and comparing it against the reference parameters (302). This analysis allows the system to evaluate whether the vehicle's performance is within the expected range or if an update is necessary to optimize its functioning. The results of this comparison are sent to the determination module (704), which assesses whether a software update (601) is required based on the analysis. The determination module is responsible for deciding whether the vehicle's current state necessitates an update. If the analysis indicates that an update is needed, the update module (704) of the control unit (101) is triggered to perform the necessary software update, ensuring that only the required changes are made to the vehicle's system. This modular structure ensures that updates are performed efficiently and only when needed, reducing unnecessary data transmissions and optimizing the vehicle's performance while minimizing downtime. Thus, the control unit (101) integrates several modules, including data collection, communication, receiving, analysis, determination, and updating, working in tandem with the server (301) to provide an intelligent, adaptive, and efficient update mechanism for the vehicle. This system ensures that the vehicle operates optimally based on real-time data and performance analysis, allowing for targeted updates that address specific needs.

At step 501, the control unit collects one or more vehicle attributes from the vehicle's sensors. This data includes real-time information about the vehicle's operational state, such as battery status, motor temperature, speed, and other critical parameters. The data collection module within the control unit ensures that the vehicle attributes are gathered accurately and continuously. This step provides a comprehensive snapshot of the vehicle's current condition, which is essential for determining if any update is needed to optimize performance or address any emerging issues. This step allows the system to monitor the vehicle's status in real time, ensuring that the most up-to-date and accurate data is always available for analysis. By collecting a wide range of vehicle attributes, the system can make informed decisions regarding updates, ensuring that the vehicle operates at its peak performance without unnecessary updates.

At step 502, the control unit sends the collected vehicle attributes to the server (301) through the communication module. The transmission of this data allows the server to receive the vehicle's current condition and start the analysis process. This step involves the transmission of the data over a network, where the server can process it in the next stages. The vehicle attributes transmitted are essential for generating the reference parameters that will guide the decision-making process for potential updates. By sending the vehicle data to the server, the system ensures that the data is centrally processed and analyzed with greater computational power. This reduces the burden on the vehicle's control unit and enhances the accuracy and reliability of the analysis, leading to better decisions regarding necessary updates.

At step 503, the server generates a plurality of reference parameters based on the vehicle attributes sent by the control unit. These reference parameters are created by analyzing the vehicle data in relation to predefined benchmarks or dynamic environmental conditions. The server uses advanced algorithms to determine the optimal parameters for the vehicle, considering various factors such as operating conditions, age, and environmental influences. These reference parameters are then sent back to the control unit for further evaluation. The server's ability to generate reference parameters ensures that the updates are tailored to the specific conditions of each vehicle. This targeted approach prevents unnecessary or generic updates that may not be relevant, thus optimizing system resources and improving vehicle performance.
At step 504, the control unit receives the plurality of reference parameters from the server. This step ensures that the vehicle is aware of the optimal reference values for its specific operational state. The reference parameters provide a detailed guideline for how the vehicle should be functioning under current conditions. The control unit is now equipped with the necessary data to analyze whether the vehicle's current performance aligns with the reference parameters. By receiving the reference parameters from the server, the vehicle's control unit is equipped with dynamic, condition-specific guidelines that allow it to adapt its operations accordingly. This ensures that the update decisions are not based on static or irrelevant data, making the entire system more intelligent and efficient.

At step 505, the monitoring, analyzing, and validation unit of the control unit (101) analyzes the real-time data against the reference parameters. This analysis allows the system to evaluate whether the current performance of the vehicle subsystems is within the optimal thresholds. The analyzing unit cross-references real-time vehicle data with the generated reference parameters to determine if any updates are required to optimize the vehicle's performance. If any discrepancies or inefficiencies are detected, the system will proceed with an update. This step ensures that updates are only triggered when necessary, based on real-time performance data and reference parameters. This reduces the likelihood of unnecessary updates, ensuring that only relevant changes are made to improve the vehicle's performance, which enhances efficiency and saves resources.

At step 506, the determination module of the control unit determines whether a software update is required. This decision is based on the results of the analysis conducted in the previous step. If the comparison between real-time data and reference parameters shows that the vehicle is underperforming or that certain subsystems need adjustment, the system will trigger an update to correct any identified issues. If the analysis determines that the vehicle is functioning within optimal parameters, no update will be performed. By incorporating a determination step, the system ensures that updates are not applied unless necessary. This adds a layer of efficiency, preventing the system from performing unnecessary updates that could waste time, bandwidth, and computational resources. The vehicle will only receive updates that are genuinely needed to maintain or improve performance.

Finally, at step 507, the update module (704) of the control unit performs the required software update based on the determination made in step 506. This update may involve adjusting settings, recalibrating vehicle subsystems, or applying optimizations to improve performance. If an update is determined to be necessary, the update module will implement the changes to the relevant subsystems of the vehicle, such as engine control, battery management, or other key systems, ensuring the vehicle operates at its best. This step enables precise, on-demand updates to the vehicle's subsystems, ensuring that only the necessary components are modified. The update process is efficient and targeted, minimizing downtime and resource consumption while enhancing the vehicle's overall performance and longevity.

Ultimately, the present subject matter provides a dynamic and data-driven approach to vehicle software updates, which significantly enhances vehicle performance, energy efficiency, and system longevity. As electric vehicles continue to evolve with more complex subsystems, the need for an adaptive update system that optimizes resources and ensures peak efficiency becomes increasingly crucial, making this innovation a substantial leap in vehicle management technology.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications. Those skilled in the art will appreciate that any of the system modules may be suitably replaced, reordered, or removed, and additional steps and/or system modules may be inserted, depending on the needs of a particular application.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure is not limited to the embodiment disclosed, but that the present disclosure will include all embodiments falling within the scope of the appended claims.

### List of Reference numerals

| | | | |
|---|---|---|---|
| 100: | Vehicle | 701: | Data Collection Module |
| 101: | Control Unit | 702: | Communication Module |
| 201: | Vehicle Attributes | 703: | Receiving Module |
| 202: | Transmitting Vehicle Attributes | 704: | Determination and Update Module |
| 301: | Server | 501: | Collecting |
| 302: | Reference Parameters | 502: | Sending |
| 303: | Monitoring, Analyzing, and | 503: | Generating |
| | Validation Unit | 504: | Receiving |
| 402: | Real-Time Data | 505: | Analyzing |
| 601: | Software Update | 506: | Determining |
| 507: | Performing | | |

## Claims

1. A method for controlling updates of a vehicle (100), the method comprising:
collecting (501) one or more vehicle attributes (201) by a control unit (101) installed in the vehicle (100);
sending (502) the one or more vehicle attributes (201) to a server (301) by the control unit (101);
generating (503) a plurality of reference parameters (302) by the server (301) based on the one or more vehicle attributes (201);
receiving (504) the plurality of reference parameters (302) from the server (301) by the control unit (101);
analyzing (505) a plurality of real-time data (402) with the plurality of reference parameters (302) by a monitoring, analyzing, and validation unit (303) of the control unit (101);
determining (506) whether a software update (601) being required based on the analysis of the plurality of real-time data (402) with the plurality of reference parameters (302); and
performing (507) the software update (601) based on the determination.

2. The method as claimed in claim 1, wherein collecting (501) one or more vehicle attributes (201) by the control unit (101) involves gathering data related to the operational parameters and history of the vehicle (100).

3. The method as claimed in claim 1, wherein sending (502) the one or more vehicle attributes (201) to the server (301) by the control unit (101) involves transmitting the collected data for further processing.

4. The method as claimed in claim 1, wherein generating (503) the plurality of reference parameters (302) by the server (301) based on the one or more vehicle attributes (201) involves creating reference parameters (302) for comparison.

5. The method as claimed in claim 1, wherein receiving (504) the plurality of reference parameters (302) from the server (301) by the control unit (101) involves obtaining the reference parameters (302) for analysis.

6. The method as claimed in claim 1, wherein analyzing (505) a plurality of real-time data (402) with the plurality of reference parameters (302) by a monitoring, analyzing, and validation unit (303) of the control unit (101) involves comparing the real-time data (402) with the reference parameters (302).

7. The method as claimed in claim 1, wherein determining (506) whether the software update (601) being required based on the analysis of the plurality of real-time data (402) with the plurality of reference parameters (302) involves deciding if the software update (601) being crucial to improve operations.

8. The method as claimed in claim 1, wherein performing (507) the software update (601) based on the determination involves implementing the software update (601) crucial to the vehicle (100).

9. A vehicle update control system (200), the system comprising:
a control unit (101) installed in the vehicle (100);
a data collection module (701) of the control unit (101) configured to collect one or more vehicle attributes (201);
a communication module (702) of the control unit (101) configured to send the one or more vehicle attributes (201) to a server (301);
the server (301) configured to generate a plurality of reference parameters (302) based on the one or more vehicle attributes (201);
a receiving module (703) of the control unit (101) configured to receive the plurality of reference parameters (302) from the server (301);
a monitoring, analyzing, and validation unit (303) of the control unit (101) configured to analyze a plurality of real-time data (402) with the plurality of reference parameters (302);
a determination module (704) of the control unit (101) configured to determine whether a software update (601) being required based on the analysis of the plurality of real-time data (402) with the plurality of reference parameters (302);
an update module (704) of the control unit (101) configured to provide the software update (601) based on the determination.

10. The system as claimed in claim 9, wherein the data collection module (701) of the control unit (101) being configured to collect one or more vehicle attributes (201) by gathering data related to the vehicle (100) operational parameters.

11. The system as claimed in claim 9, wherein the communication module (702) of the control unit (101) being configured to send the one or more vehicle attributes (201) to the server (301).

12. The system as claimed in claim 9, wherein the server (301) being configured to generate the plurality of reference parameters (302) based on the one or more vehicle attributes (201) by creating reference parameters (302) for comparison.

13. The system as claimed in claim 9, wherein the receiving module (703) of the control unit (101) being configured to receive the plurality of reference parameters (302) from the server (301) by obtaining the plurality of reference parameters (302) for analysis.

14. The system as claimed in claim 9, wherein the monitoring, analyzing, and validation unit (303) of the control unit (101) being configured to analyze the plurality of real-time data (402) with the plurality of reference parameters (302) by comparing real-time data (402) with the plurality of reference parameters (302).

15. The system as claimed in claim 9, wherein the determination module (704) of the control unit (101) being configured to determine whether a software update (601) being required based on the analysis of the plurality of real-time data (402) with the plurality of reference parameters (302) by deciding if the software update (601) being crucial to improve performance.
